# EUROPEAN PATENT APPLICATION

(11) **EP 3 419 125 A1**
(43) Date of publication of application: **26.12.2018**
(21) Application number: 17382374.1
(22) Date of filing: 20.06.2017
(51) Int. Cl.: H02B 1/14, H02B 1/20, H02G 5/00, H02G 5/04

(54) **PROTECTION DEVICE FOR ELECTRICAL BUSBARS**

(71) Applicant: Gorlan Team, S.L.U., 48340 Amorebieta Vizcaya (ES)
(72) Inventor: GÓMEZ BARBERO, Jose Julio, 48340 AMOREBIETA (Vizcaya) (ES)
(74) Representative: Herrero & Asociados, S.L.

(57) **Abstract**

The present invention relates to a protection device for at least one conductive flat bar of an electrical busbar for protecting against human contact, comprising a first retaining face arranged for contacting a first smaller face of the conductive flat bar of the electrical busbar, a second retaining face arranged for contacting a larger rear face of the conductive flat bar and a front portion, facing the second retaining face, covering a larger front face of said conductive flat bar, comprising at least one flexible element arranged in the front portion, wherein said flexible element has at least one projection which, when in contact with a second smaller face of the conductive flat bar, retains said conductive flat bar and limits the vertical movement thereof.

## Description

### Field of the Art

The present invention relates to a protection device for electrical busbars.

### Background of the Invention

Different systems for protecting busbars, preventing electrocution accidents caused by an operator possibly contacting said busbars, are available today. Electrical busbar protection devices generally cover the conductive flat bars of the busbars of an electric switchboard, connecting an electric switchboard with the network powering it, while at the same time allowing a certain access for making the required electrical connections.

A common problem which arises during handling busbars is that, when assembling the corresponding fuse bases or other devices in the protected busbar or when disassembling same, the installed protectors may receive blows and then come off by accident, which entails a high risk of electrocution for the operators.

To solve this problem, the state of the art offers solutions incorporating a retention system in busbar protective devices preventing same from coming off by accident. Some of these solutions with abutments which prevent said devices from coming off resort to using additional parts as abutment.

Given that one and the same protector can be mounted on a myriad of busbars of different sizes, retention in a fixed position is not compatible with busbars of different sizes, so said solutions provide a costly answer to this problem by means of additional parts, and in other cases, such as in patent document EP2037550 B1, when the fixing is integrated in the protector, the busbar must be machined to provide it with holes to perform retention, which is even more expensive and complex.

Therefore, the state of the art lacks a protection device for electrical busbars which, with a simple and easy-to-handle structure, makes mounting thereof easier without having to add additional parts or to machine/modify the busbars, in addition to being compatible with busbars of different sizes.

### Description of the Invention

The present invention solves the aforementioned problems by providing a configuration including the retention system in the protector itself, while at the same time allowing the mounting thereof without having to machine/modify the busbars, and is compatible with busbars of various sizes. To that end, a first aspect of the invention relates to a protection device for at least one conductive flat bar of an electrical busbar for protecting against human contact, comprising a first retaining face arranged for contacting a first smaller face of the conductive flat bar of the electrical busbar, a second retaining face arranged for contacting a larger rear face of the conductive flat bar and a front portion, facing the second retaining face, covering a larger front face of said conductive flat bar, comprising at least one flexible element arranged in the front portion, wherein said flexible element has at least one projection which, when in contact with a second smaller face of the conductive flat bar, retains said conductive flat bar and limits the vertical movement thereof.

It is contemplated for the at least one flexible element to comprise two or more projections, arranged at different heights along the length of said at least one flexible element. The protection device is therefore advantageously adapted to different flat bar widths.

In one of the embodiments of the invention, two or more flexible elements arranged at different heights and/or widths along the length and width of the front portion are contemplated. The protection device is therefore advantageously adapted to different flat bar types.

It is contemplated for the at least one flexible element to be attached at only one of its ends to the front portion. Advantageously, since the rest of its perimeter is free, this allows the flexible element to readily pivot or swing from its standby position when a certain force is applied thereto.

Additionally, in one of the embodiments of the invention the attachment end of the at least one flexible element is arranged on a plane parallel to the front portion.

Optionally and according to a particular embodiment of the invention, it is contemplated for the attachment end of the at least one flexible element to be arranged in a protuberance of the front portion. Therefore, a more advantageous position for retaining the flat bar is achieved, and furthermore, a free space is defined so that, upon bending the flexible element, said element does not project through the outer face of the front portion.

In one of the embodiments of the invention, the protuberance is arranged on an inner face of the front portion, further comprising a cavity arranged on an outer face of the front portion coinciding with said protuberance, which allows handling the at least one flexible element from the outer face. The protection device can therefore be removed from the flat bar by simply pressing on the flexible element from the coinciding cavity.

Additionally, the upper portion of the device of the present invention has, according to one of the embodiments thereof, a plurality of holes for housing a fuse base. Advantageously, these holes also serve as a guide for the person performing the installation, since they make mounting the fuse bases easier.

One of the embodiments contemplates an area for accessing the conductive flat bar through the front portion of the device, wherein said area comprises a plurality of holes with dimensions which prevent access with a finger and in turn allow introducing a part for electrically connecting electrical equipment to one of the larger faces of said conductive flat bar.

It is contemplated in one of the embodiments of the invention, at least one holding tab, one of the ends thereof being attached to the first retaining face and the other end being free, defining an area for receiving the conductive flat bar by way of a hook, wherein the second retaining face is arranged in said at least one holding tab.

The first retaining face and the second retaining face comprise, according to one of the embodiments of the invention, two planar segments perpendicular to one another. Advantageously, this shape is perfectly adapted to be hung from a conductive flat bar of an electrical busbar. Additionally, one of the embodiments comprises a lower portion arranged such that it completes a C shape.

According to one of the embodiments of the invention, the lower portion comprises coupling means for being attached to a second protection device. Therefore, an assembly consisting of several devices vertically coupled for covering busbars with several conductive flat bars can advantageously be formed. Since the devices are coupled to one another, an assembly consisting of devices is more securely fixed than a device alone, even when some of them do not use flexible holding clips. Specifically, one of the embodiments of the present invention contemplates an assembly consisting of three devices vertically coupled for protecting a three-phase busbar, although a greater or smaller number of devices can be coupled.

According to one of the embodiments of the invention, the front portion further comprises side coupling means arranged on one of the ends thereof for being attached to another protection device. Therefore, an assembly consisting of several devices laterally coupled for extending the length of the protection of a conductive flat bar can advantageously be formed. Since the devices are coupled to one another, an assembly consisting of devices is more securely fixed than a device alone, even when some of them do not use flexible holding clips.

Therefore, the present invention presents a series of significant advantages including, among others, the ease of installation in busbars of any width with conductive flat bars having a rectangular section. Furthermore, once installed, it is not necessary to remove it for the connection of electrical equipment, which can be safely connected, since the busbar is protected at all times.

Although the protective device of the present invention is manufactured in insulating material and has a specific length, several identical devices can be attached together to achieve a greater length and width of the protected surfaces of the busbars.

### Brief Description of the Drawings

To complement the description that is being made and for the purpose of aiding to better understand the features of the invention, a set of drawings is attached as an integral portion of said description in which the following has been depicted with an illustrative and non-limiting character:
Figure 1 shows a back view of the device of the invention coupled to a conductive flat bar.
Figure 2 shows a view of several assemblies consisting of devices of the invention coupled to busbars with conductive flat bars of different widths.
Figure 3 shows a plurality of devices of the invention coupled to one another both vertically and horizontally.
Figure 4 shows a view of the outer face of the device, coupled to busbars of different widths.

### Detailed Description of the Invention

In view of the mentioned drawings, a protective device (1) for electrical busbars which, when installed on of the conductive flat bars (6) of the busbar, prevents being able to touch said busbar from the front with fingers by means of a front protection area can be described as a practical embodiment of the invention, said protection area being more or less parallel to the larger faces of the flat bar of the busbar, acting like a screen and preventing the operator from contacting the busbar with their fingers, but keeping the busbar accessible by means of an electrical contact area containing holes of a size such that they do not allow access of the operator's finger, but allow access of the contacts for connecting an electric device to the busbar. These holes are depicted with a grooved shape (12) in the drawings, but any other geometric shape is possible.

The retention of the busbar, at least of one of its conductive flat bars, is performed by means of two different areas of the protective device: a hook-shaped retention area, which in one of the embodiments comprises holding tabs, for hanging the protector from a face of the flat bar; and a clip area responsible for retaining the flat bar by the opposite face.

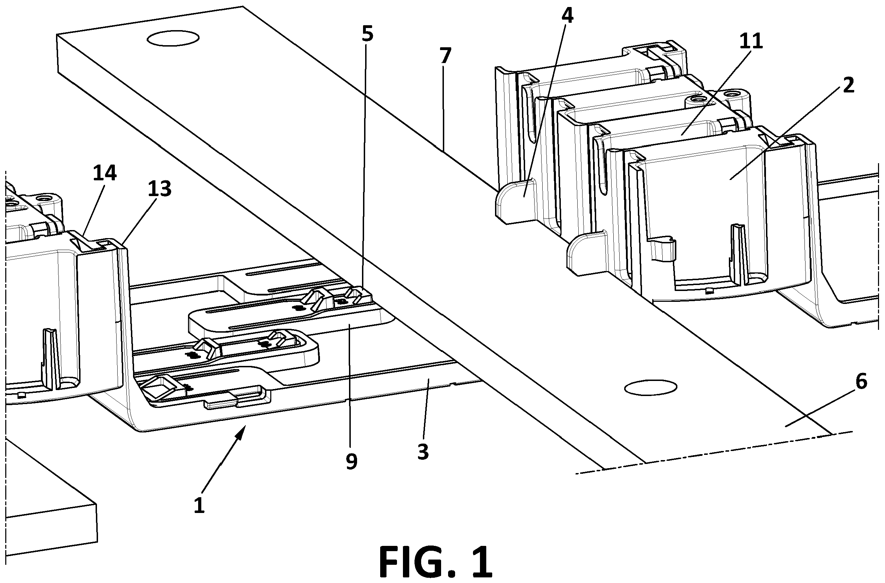

The protection device of Figure 1 shows one embodiment of the invention, which furthermore has in the upper portion (2) thereof an area with holes (11) for connecting a fuse base, or any other electric device without having to remove the protector entirely or partially. In turn, this upper portion contributes to the retention area comprising a retaining face adapted to be supported on the conductive flat bar (6) of the electrical busbar by means of one of the smaller faces (7) thereof. The smaller faces are the faces of the conductive flat bar having a smaller width.

In the assembly position, with the retaining face of the upper portion of the protection device supported on the conductive flat bar, the front portion (3) of the protection device covers the larger outer face (8) (the larger faces are the faces having a larger width) of the conductive flat bar.

The protection device is fixed to the conductive flat bar by means of holding tabs (4) hanging from the upper portion of the protection device and one of the flexible holding clips of the plurality of flexible holding clips arranged in the clipping area of the front portion of the device to prevent the vertical movement of the protection device. The holding tabs offer a retaining face, facing the inner face of the front portion of the device, arranged for supporting the larger rear face of the conductive flat bar of the electrical busbar and thereby limiting its horizontal movement (preventing the device from moving forward).

The protection device is assembled on the conductive flat bar by placing said protection device on the conductive flat bar and coupling the device to the flat bar such that the flat bar is inserted into the space defined between the retaining face of the upper portion, the retaining face of the holding tabs and the inner face of the front portion of the device. Then, depending on the width of the larger face of the flat bar, one of the flexible holding clips arranged at different heights and widths in the front portion of the device, will be arranged in the suitable position for retaining the conductive flat bar by means of its other smaller face, so the operator only has to apply slight pressure for fitting the flat bar and retaining it by means of said clip. The contact face of the clip with the conductive flat bar is on a plane perpendicular to the front portion of the protection device, i.e., on a plane parallel to the smaller face of the flat bar.

In this assembly position, the flexible holding clips which are arranged at a smaller distance (measured from the retaining face arranged for retaining the smaller face of the conductive flat bar) than the width of the conductive flat bar, adopt a bent position due to the push of said flat bar. The flexible holding clips have a certain thickness and project slightly from the inner face of the device in the normal relax position, but when the protection device is coupled to the conductive flat bar, the clips which are arranged at a distance, measured from the retaining face arranged for abutting the smaller face of the conductive flat bar, smaller than the width of the flat bar, are covered by said flat bar, so they are pressed by one of the larger faces of said flat bar and brought to a bent position, in which the clip has swung from a first relax position to a second drawn back position. Therefore, when one of the clips is acting on a busbar, the rest adopts a position that does not interfere with the work of the clip acting at that moment.

The clips are arranged such that they do not project through the outer face of the front portion of the protection device in the bent position.

In the embodiment depicted in the drawings, the flexible clips comprise a plate, or a flexible element, and one or more projections along the length of said plate. This assembly is arranged in the front portion attached at only one of the ends of the plate, the rest of the perimeter thereof being free. It is preferably arranged on a protuberance (9) of said front portion, reserving a certain space so that the clip, when being bent by the push of the conductive flat bar, does not project through the outer face of the front portion.

Each of the plates or flexible elements houses one or more holding projections, such that the protection device can be used for various conductive flat bars with different widths, and depending on size of the busbar, one clip or another acts to retain the busbar. Preferably, the heights at which the holding projections are arranged correspond with the most standard busbar sizes.

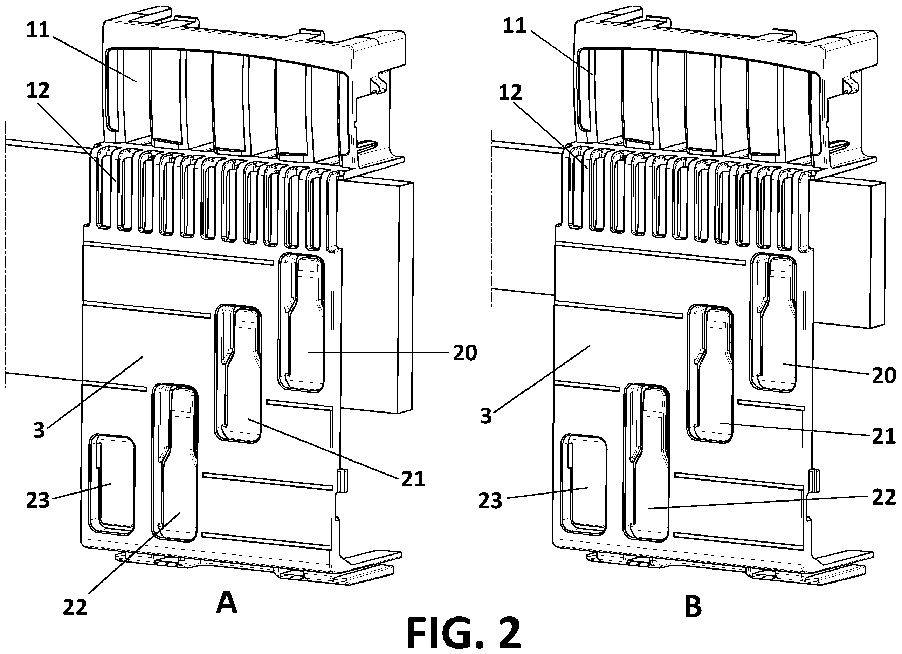

It can be seen in Figure 2A how the flexible element 20 is in the bent position, pushed by the conductive flat bar of the busbar. In contrast, the flexible element 21 is perfectly coupled to the width of said flat bar and retains same. Since the flexible elements 22 and 23 are arranged at distances larger than the width of the flat bar, they remain in a relax position. In Figure 2B, the same protective device, with a specific flexible element configuration, is coupled to a conductive flat bar of an electrical busbar having a smaller width than that of Figure 2A. In this case, it is the flexible element 20 which is perfectly adapted to the width of the flat bar and retains same by means of one of the inner projections thereof, whereas the flexible element 21 remains in the relax position, since it is arranged at a distance larger than the width of this flat bar.

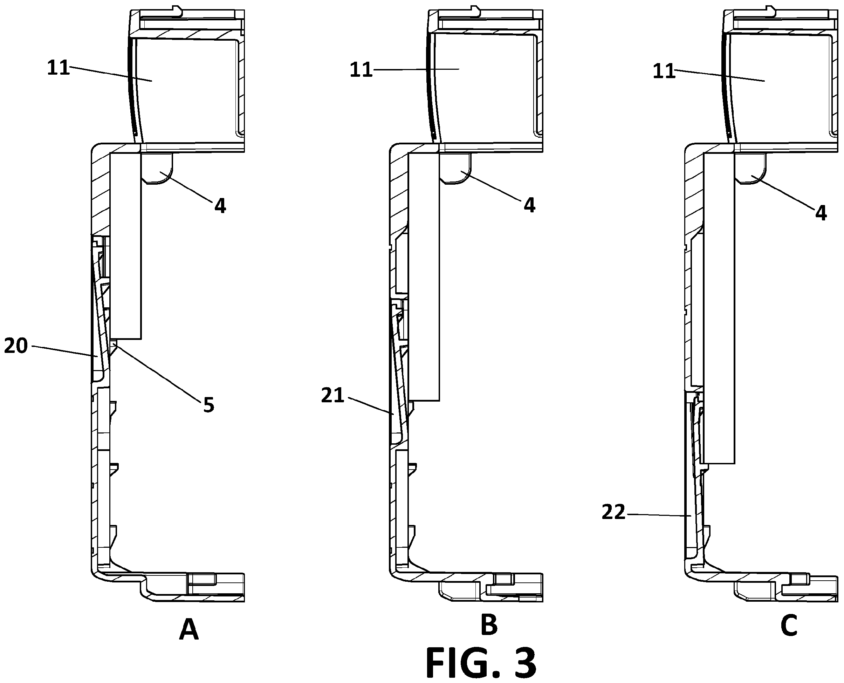

Figures 3A, 3B and 3C show the protector of the present invention according to a specific flexible element distribution such as the one of Figures 2A and 2B. Therefore, from a profile view, the protector is coupled to busbars of different widths, so depending on the width of the flat bar of Figures 3A, 3B and 3C, the flexible element suitable for retaining said flat bar is the flexible element 20, 21 and 22, respectively.

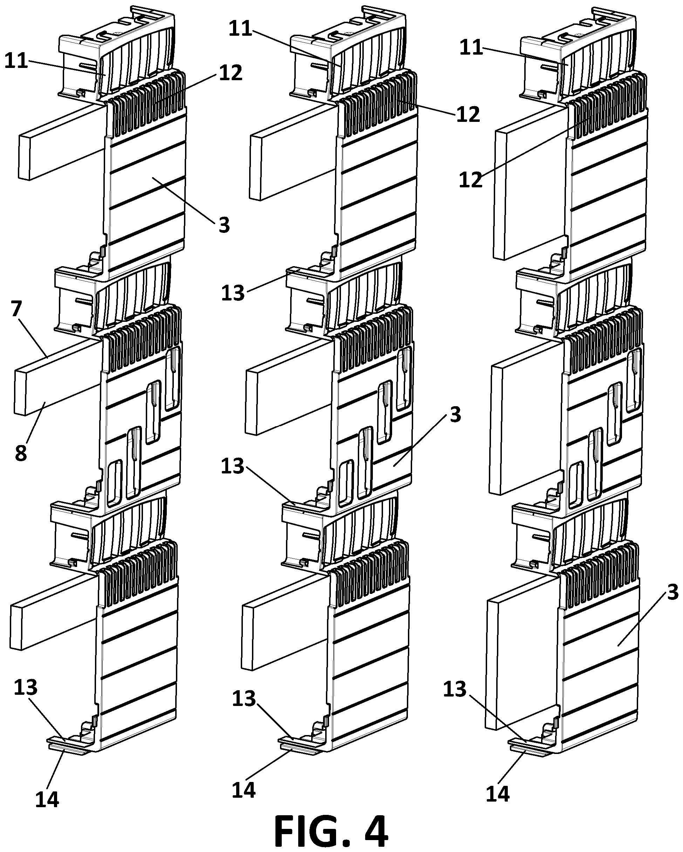

The busbar protection device of the present invention consists of an individual module that can be coupled to one of the conductive flat bars of a busbar, but these devices are not usually installed alone, but rather installed together for covering a larger distance, since a single device is not generally sufficient for fully protecting a busbar (according to one of the embodiments, a single device covers a width of 100 mm, although other measurements are also indeed possible). In this sense, Figure 4 depicts one of the embodiments of the invention contemplating the installation thereof in assemblies of three, for a three-pole system, in which the flexible holding clips can be coupled to the conductive flat bars corresponding to each of the three phases, or placed only in one of them, since a busbar is a very rigid element, and with only one of the three protective devices being fixed to one of the flat bars, the entire assembly will be fixed. To fix protection devices to one another, the protection devices of the present invention preferably have a lower portion (13), arranged in a plane parallel to the upper portion, causing the device to have a C shape. This lower portion has assembling means (14) which allow, by means of a simple set of recesses, assembling the lower portion of a device with the upper portion of another device by way of tongue and groove joint.

In another embodiment of the present invention, not depicted in the drawings, a multiple protection device installation is contemplated where, in addition to the vertical assembly described in Figure 4, a horizontal assembly is also performed. Therefore, the entire front portion of the busbar can be covered and any accidental contact can be completely prevented. The lateral installation benefits from quick coupling means by way of tongue and groove joint or fastening, arranged on the side edges of the central portion of the device so that it can be longitudinally attached to other contiguous device. The length of protection can therefore be increased as much as desired.

## Claims

1. Protection device (1) for at least one conductive flat bar (6) of an electrical busbar for protecting against human contact, comprising a first retaining face arranged for contacting a first smaller face (7) of the conductive flat bar of the electrical busbar, a second retaining face arranged for contacting a larger rear face of the conductive flat bar and a front portion (3), facing the second retaining face, covering a larger front face (8) of said conductive flat bar, **characterized in that** it comprises at least one flexible element (21) arranged in the front portion, wherein said flexible element has at least one projection (5) which, when in contact with a second smaller face of the conductive flat bar, retains said conductive flat bar and limits the vertical movement thereof.

2. Device according to claim 1, wherein the at least one flexible element comprises two or more projections, arranged at different heights along the length of said at least one flexible element.

3. Device according to any of the preceding claims, comprising two or more flexible elements arranged at different heights and/or widths along the length and width of the front portion.

4. Device according to any of the preceding claims, wherein the at least one flexible element is attached at only one of its ends to the front portion.

5. Device according to claim 4, wherein the attachment end of the at least one flexible element is arranged on a plane parallel to the front portion.

6. Device according to claim 5, wherein the attachment end of the at least one flexible element is arranged in a protuberance (9) of the front portion.

7. Device according to claim 6, wherein the protuberance is arranged on an inner face of the front portion, further comprising a cavity arranged on an outer face of the front portion coinciding with said protuberance, which allows handling the at least one flexible element from the outer face.

8. Device according to any of the preceding claims, wherein the front portion further comprises a plurality of holes (12), wherein each of said holes has dimensions which prevent access with a finger and in turn allow introducing a part for electrically connecting electrical equipment to one of the larger faces of said conductive flat bar.

9. Device according to any of the preceding claims, comprising at least one holding tab (4), one of the ends thereof being attached to the first retaining face and the other end being free, defining an area for receiving the conductive flat bar by way of a hook, wherein the second retaining face is arranged in said at least one holding tab.

10. Device according to any of the preceding claims, wherein the first retaining face and the second retaining face comprise two planar segments perpendicular to one another.

11. Device according to any of the preceding claims, further comprising a lower portion (13) parallel to the first retaining face, wherein the device has a C shape.

12. Device according to claim 11, wherein the lower portion comprises coupling means (14) for being attached to a second protection device.

13. Device according to any of the preceding claims, further comprising side coupling means arranged on one of the edges thereof for being attached to another identical protection device.

14. Protection system for electrical busbars for protecting against human contact, comprising three devices according to claim 12 coupled to one another, for three-pole electrical busbars.
